(19)

Europäisches Patentamt
European Patent Office
Office européen des brevets

(11) **EP 4 608 011 A1**

(12) **EUROPEAN PATENT APPLICATION**
published in accordance with Art. 153(4) EPC

(43) Date of publication:
**27.08.2025 Bulletin 2025/35**

(21) Application number: **22964130.3**

(22) Date of filing: **04.11.2022**

(51) International Patent Classification (IPC):
**H04W 36/08** (2009.01)

(52) Cooperative Patent Classification (CPC):
**H04W 36/08**

(86) International application number:
**PCT/CN2022/130137**

(87) International publication number:
**WO 2024/092829 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **SUN, Li
  Shenzhen, Guangdong 518129 (CN)**
• **WANG, Wenhui
  Shenzhen, Guangdong 518129 (CN)**
• **LIU, Peng
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, AND APPARATUS**

(57) A communication method and apparatus are disclosed. The method includes: A terminal device receives an error floor of a serving cell from the serving cell. The terminal device determines whether the error floor of the serving cell is less than a preset threshold, where the preset threshold is determined based on a preset security parameter, the preset security parameter includes a preset degree of approaching or a preset security level, and the preset degree of approaching is a ratio of key entropy needed for encrypting information entropy to the information entropy. The terminal device starts cell reselection if the error floor of the serving cell is less than the preset threshold. According to the foregoing method, the cell reselection is started in consideration of a communication security requirement of the terminal device, so that security of communication between the terminal device and another device can be improved.

FIG. 5

**Description**

TECHNICAL FIELD

Embodiments of this application relate to the field of wireless communication, and in particular, to a communication method and apparatus.

BACKGROUND

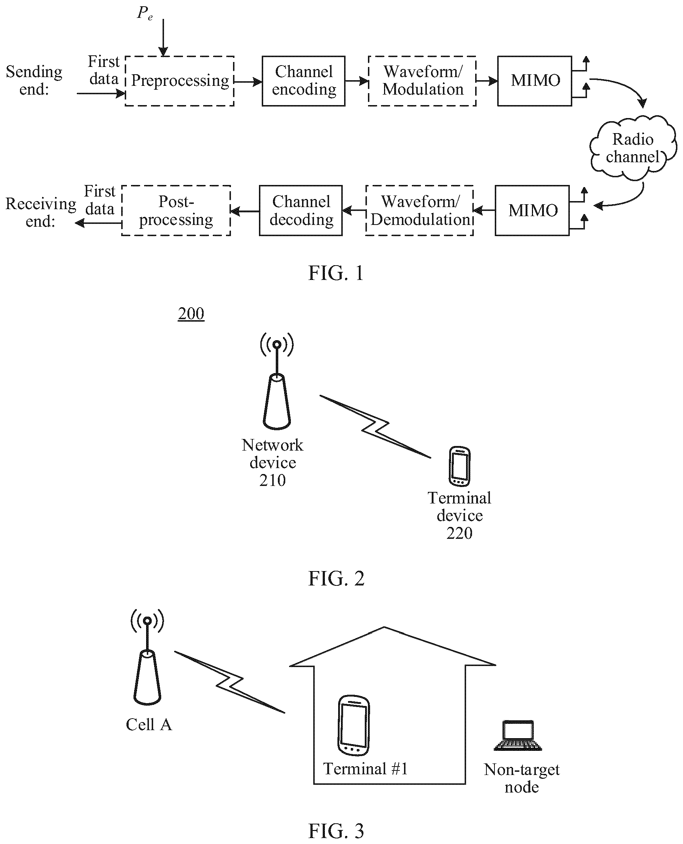

An architecture of a keyless secure transmission system is shown in FIG. 1. The keyless secure transmission system includes a communication module and a security module. The communication module includes modules in solid boxes in FIG. 1. The communication module implements information transmission and provides a basic security capability by using a physical-layer secure transmission technology (for example, a beamforming solution and an artificial-noise solution). The security module includes modules in dashed boxes in FIG. 1, and the security module is constructed by using a cryptography method, so that the foregoing keyless secure transmission system achieves provable security strength.

This architecture integrates the cryptography method (different from classic cryptography technologies such as encryption and decryption) and the physical-layer security technology, and aims to implement a keyless endogenous-security mechanism. In this architecture, a high error floor (for example, greater than 0.1) is first created at a non-target node by using the physical-layer security technology, to be specific, random entropy is introduced on an illegitimate channel. On this basis, a preprocessing module is introduced to a transmitter. For example, the module is a randomness extractor, and can extract and spread the random entropy introduced on the illegitimate channel by using the physical-layer security technology, to obtain equivalent keys that are approximately evenly distributed, so that each bit in an information bit group achieves provable security strength.

The architecture of the keyless secure transmission system is a new secure transmission architecture, and is different from both a cryptography-based secure communication system that is widely used in practice and a secure communication system implemented by only using a physical-layer security technology. Currently, there is no performance indicator for measuring and evaluating security of the keyless secure transmission system. Furthermore, after the performance indicator is defined, how to perform cell reselection and/or cell handover based on the performance indicator is a problem that deserves attention.

SUMMARY

This application provides a communication method and apparatus, to define a performance indicator for evaluating security of a keyless secure transmission system, and perform cell reselection and/or cell handover based on the performance indicator.

According to a first aspect, this application provides a communication method. The method includes: a terminal device receives an error floor of a serving cell from the serving cell. The terminal device determines whether the error floor of the serving cell is less than a preset threshold, where the preset threshold is determined based on a preset security parameter, the preset security parameter includes a preset degree of approaching or a preset security level, and the preset degree of approaching is a ratio of key entropy needed for encrypting information entropy to the information entropy. The terminal device starts cell reselection if the error floor of the serving cell is less than the preset threshold.

In an existing cell reselection solution, cell reselection is performed based on an indicator, for example, a channel condition or a communication resource, related to communication quality. However, in the foregoing method, the terminal device considers the preset security parameter and the error floor of the serving cell, and starts the cell reselection when the error floor of the serving cell is less than the preset threshold determined based on the preset security parameter. Therefore, the cell reselection is started in consideration of a communication security requirement of the terminal device, so that security of communication between the terminal device and another device can be improved.

In a possible design, the error floor of the serving cell is a smallest bit error rate in a bit error rate of any location that is within a coverage area of the serving cell and that is outside a controlled area.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is $1 - 2^{-\frac{\lambda_0}{L}}$, where $\lambda_0$ represents the preset security level, and L represents the length of the data group.

In a possible design, when the terminal device starts the cell reselection, the terminal device sends indication information to the serving cell, where the indication information indicates that the error floor of the serving cell is less than the preset threshold.

According to the foregoing method, the terminal device notifies the serving cell that the error floor of the serving cell is less than the preset threshold, so that the serving cell sends measurement configuration information to the terminal device.

In a possible design, the terminal device receives error floors respectively corresponding to a plurality of neighboring cells. The terminal device determines, based on the error floors respectively corresponding to the plurality of neighboring cells, at least one neighboring cell whose error floor is greater than or equal to the preset threshold in the plurality of neighboring cells. The terminal device determines a reselected cell based on a channel measurement result respectively corresponding to the at least one neighboring cell whose error floor is greater than or equal to the preset threshold, where the reselected cell is one of the at least one neighboring cell whose error floor is greater than or equal to the preset threshold.

According to the foregoing method, the reselected cell determined by the terminal device is a neighboring cell whose error floor is greater than or equal to the preset threshold, so that security of communication between the terminal device and the selected neighboring cell can be ensured.

In a possible design, the terminal device receives error floors respectively corresponding to a plurality of neighboring cells. The terminal device updates the preset security parameter if the terminal device determines, based on the error floors respectively corresponding to the plurality of neighboring cells, that no neighboring cell whose error floor is greater than or equal to the preset threshold exists. The terminal device determines, based on the error floors respectively corresponding to the plurality of neighboring cells, that at least one neighboring cell whose error floor is greater than or equal to an updated preset threshold exists in the plurality of neighboring cells, where the updated preset threshold is determined based on an updated preset security parameter. The terminal device determines a reselected cell based on a channel measurement result respectively corresponding to the at least one neighboring cell whose error floor is greater than or equal to the updated preset threshold, where the reselected cell is one of the at least one neighboring cell whose error floor is greater than or equal to the updated preset threshold.

According to the foregoing design, when determining that no neighboring cell that meets a condition exists, the terminal device may adjust a preset parameter, so that a neighboring cell whose error floor is greater than or equal to the updated preset threshold exists, to ensure security of communication between the terminal device and the selected neighboring cell.

According to a second aspect, this application provides a communication method. The method includes: a serving cell receives a preset security parameter from a terminal device, where the preset security parameter includes a preset degree of approaching or a preset security level, and the preset degree of approaching is a ratio of key entropy needed for encrypting information entropy to the information entropy. The serving cell sends the preset security parameter to a plurality of neighboring cells. When the serving cell needs to be switched, the serving cell receives a measurement report from the terminal device, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter. The serving cell determines a target cell based on the measurement report, where an error floor of the target cell is greater than or equal to the preset threshold.

In an existing cell handover solution, a communication security requirement of a terminal device is not considered. However, in the foregoing method, the serving cell sends, to the plurality of neighboring cells, the preset security parameter reported by the terminal device, obtains the verification results of the plurality of neighboring cells by using the measurement report, and determines the target cell based on the verification results of the plurality of neighboring cells, so that a communication security requirement of the terminal device can be met.

In a possible design, when the serving cell needs to be switched, the serving cell determines that an error floor of the serving cell is less than the preset threshold; or the serving cell determines that an error floor of the serving cell is greater than or equal to the preset threshold, but the serving cell meets a preset condition.

It may be understood that, that the serving cell needs to be switched may mean: the serving cell does not meet a communication secure requirement of the terminal device; or the serving cell meets a communication secure requirement and meets an existing determining condition for triggering cell handover.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, the error floor of each cell is a smallest bit error rate in a bit error rate of any location that is within a coverage area of the cell and that is outside a controlled area.

According to a third aspect, this application provides a communication method. The method includes: a serving cell receives a preset security parameter from a terminal device, where the preset security parameter includes a preset degree of approaching or a preset security level, and the preset degree of approaching is a ratio of key entropy needed for encrypting information entropy to the information entropy. The serving cell receives error floors respectively corresponding to a plurality of neighboring cells. When the serving cell needs to be switched, the serving cell determines a target cell based on the preset security parameter and the error floors respectively corresponding to the plurality of neighboring cells, where an error floor of the target cell is greater than or equal to a preset threshold, and the preset threshold is determined based on the preset security parameter.

In an existing cell handover solution, a communication security requirement of a terminal device is not considered. However, in the foregoing method, the serving cell receives the preset security parameter reported by the terminal device and the error floors respectively corresponding to the plurality of neighboring cells, and determines a neighboring cell whose error floor is greater than or equal to the preset threshold as the target cell, so that a communication security requirement of the terminal device can be met.

In a possible design, when the serving cell needs to be switched, the serving cell determines that an error floor of the serving cell is less than the preset threshold; or the serving cell determines that an error floor of the serving cell is greater than or equal to the preset threshold, but the serving cell meets a preset condition.

It may be understood that, that the serving cell needs to be switched may mean: The serving cell does not meet a communication secure requirement of the terminal device; or the serving cell meets a communication secure requirement, and meets an existing determining condition for triggering cell handover.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, an error floor of each cell is a smallest bit error rate in a bit error rate of any location that is within a coverage area of the cell and that is outside a controlled area.

In a possible design, before the serving cell receives the error floors respectively corresponding to the plurality of neighboring cells, the serving cell sends a request message to each neighboring cell in the plurality of neighboring cells, where the request message is for requesting an error floor of the neighboring cell.

According to the foregoing design, the serving cell may request the error floors respectively corresponding to the plurality of neighboring cells.

In a possible design, the serving cell determines the target cell based on the at least one neighboring cell whose error floor is greater than or equal to the preset threshold. The serving cell receives a measurement report from the terminal device. The serving cell determines the target cell based on the measurement report and at least one neighboring cell whose error floor is greater than or equal to the preset threshold, where the measurement report includes a channel measurement result respectively corresponding to the at least one neighboring cell whose error floor is greater than or equal to the preset threshold.

According to the foregoing design, the serving cell may determine the target cell with reference to the channel measurement result respectively corresponding to the at least one neighboring cell whose error floor is greater than or equal to the preset threshold.

According to a fourth aspect, this application provides a communication apparatus. The apparatus includes: a transceiver module, configured to receive an error floor of a serving cell from the serving cell; and a processing module, configured to determine whether the error floor of the serving cell is less than a preset threshold, where the preset threshold is determined based on a preset security parameter, the preset security parameter includes a preset degree of approaching or a preset security level, and the preset degree of approaching is a ratio of key entropy needed for encrypting information entropy to the information entropy. The processing module starts cell reselection if the error floor of the serving cell is less than the preset threshold.

In a possible design, the error floor of the serving cell is a smallest bit error rate in a bit error rate of any location that is within a coverage area of the serving cell and that is outside a controlled area.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$1 - 2^{-\frac{\lambda_0}{L}}$ , where $\lambda_0$ represents the preset security level, and L represents the length of the data group.

In a possible design, the transceiver module is configured to send indication information to the serving cell when the cell reselection is started, where the indication information indicates that the error floor of the serving cell is less than the preset threshold.

In a possible design, the transceiver module is configured to receive error floors respectively corresponding to a plurality of neighboring cells.

The processing module is configured to: determine, based on the error floors respectively corresponding to the plurality of neighboring cells, at least one neighboring cell whose error floor is greater than or equal to the preset threshold in the plurality of neighboring cells; and determine a reselected cell based on a channel measurement result respectively corresponding to the at least one neighboring cell whose error floor is greater than or equal to the preset threshold, where the reselected cell is one of the at least one neighboring cell whose error floor is greater than or equal to the preset threshold.

In a possible design, the transceiver module is configured to receive error floors respectively corresponding to a plurality of neighboring cells. The processing module is configured to: update, by the apparatus, the preset security parameter if it is determined, based on the error floors respectively corresponding to the plurality of neighboring cells, that no neighboring cell whose error floor is greater than or equal to the preset threshold exists; determine, based on the error floors respectively corresponding to the plurality of neighboring cells, that at least one neighboring cell whose error floor is greater than or equal to an updated preset threshold exists in the plurality of neighboring cells, where the updated preset threshold is determined based on an updated preset security parameter; and determine a reselected cell based on a channel measurement result respectively corresponding to the at least one neighboring cell whose error floor is greater than or equal to the updated preset threshold, where the reselected cell is one of the at least one neighboring cell whose error floor is greater than or equal to the updated preset threshold.

According to a fifth aspect, this application provides a communication apparatus. The apparatus includes: a transceiver module, configured to: receive a preset security parameter from a terminal device, where the preset security parameter includes a preset degree of approaching or a preset security level, and the preset degree of approaching is a ratio of key entropy needed for encrypting information entropy to the information entropy; and send the preset security parameter to a plurality of neighboring cells, where the transceiver module is configured to receive a measurement report from the terminal device when the apparatus needs to be switched, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter; and a processing module, configured to determine a target cell based on the measurement report, where an error floor of the target cell is greater than or equal to the preset threshold.

In a possible design, the processing module is configured to: when the apparatus needs to be switched, determine that an error floor of the apparatus is less than the preset threshold; or determine that an error floor of the apparatus is greater than or equal to the preset threshold, but the apparatus meets a preset condition.

In a possible design, when the preset security parameter includes the preset degree of approaching, the preset threshold is 1 - $2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$1 - 2^{-\frac{\lambda_0}{L}}$ , where $\lambda_0$ represents the preset security level, and L represents the length of the data group.

In a possible design, the error floor of each cell is a smallest bit error rate in a bit error rate of any location that is within a coverage area of the cell and that is outside a controlled area.

According to a sixth aspect, this application provides a communication apparatus. The apparatus includes: a transceiver module, configured to: receive a preset security parameter from a terminal device, where the preset security parameter includes a preset degree of approaching or a preset security level, and the preset degree of approaching is a ratio of key entropy needed for encrypting information entropy to the information entropy; and receive error floors respectively corresponding to a plurality of neighboring cells; and a processing module, configured to: when the apparatus needs to be switched, determine a target cell based on the preset security parameter and the error floors respectively corresponding to the plurality of neighboring cells, where an error floor of the target cell is greater than or equal to a preset threshold, and the preset threshold is determined based on the preset security parameter.

In a possible design, when the apparatus needs to be switched, the processing module is configured to: determine that an error floor of the apparatus is less than the preset threshold; or determine that an error floor of the apparatus is greater than or equal to the preset threshold, but the apparatus meets a preset condition.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, an error floor of each cell is a smallest bit error rate in a bit error rate of any location that is within a coverage area of the cell and that is outside a controlled area.

In a possible design, the transceiver module is configured to: before the error floors respectively corresponding to the plurality of neighboring cells are received, send a request message to each neighboring cell in the plurality of neighboring cells, where the request message is for requesting an error floor of the neighboring cell.

In a possible design, when the target cell is determined based on the at least one neighboring cell whose error floor is greater than or equal to the preset threshold, the transceiver module receives a measurement report from the terminal device. The processing module determines the target cell based on the measurement report and at least one neighboring cell whose error floor is greater than or equal to the preset threshold, where the measurement report includes a channel measurement result respectively corresponding to the at least one neighboring cell whose error floor is greater than or equal to the preset threshold.

For technical effects that can be achieved in any one of the fourth aspect or the possible implementations of the fourth aspect, refer to the technical effects that can be achieved in any one of the first aspect or the possible implementations of the first aspect. For technical effects that can be achieved in any one of the fifth aspect or the possible implementations of the fifth aspect, refer to the technical effects that can be achieved in any one of the second aspect or the possible implementations of the second aspect. For technical effects that can be achieved in any one of the sixth aspect or the possible implementations of the sixth aspect, refer to the technical effects that can be achieved in any one of the third aspect or the possible implementations of the third aspect. Details are not described herein again.

According to a seventh aspect, an embodiment of this application provides a communication apparatus. The apparatus includes at least one processor and an interface circuit. The interface circuit is configured to provide input and/or output of a program or instructions for the at least one processor. The at least one processor is configured to execute the program or the instructions to enable the communication apparatus to implement the method according to any one of the first aspect or the possible implementations of the first aspect, execute the program or the instructions to enable the communication apparatus to implement the method according to any one of the second aspect or the possible implementations of the second aspect, or execute the program or the instructions to enable the communication apparatus to implement the method according to any one of the third aspect or the possible implementations of the third aspect.

According to an eighth aspect, an embodiment of this application provides a computer storage medium. The storage medium stores a software program; and when the software program is read and executed by one or more processors, the method according to any one of the first aspect or the possible implementations of the first aspect may be implemented, the method according to any one of the second aspect or the possible implementations of the second aspect may be implemented, or the method according to any one of the third aspect or the possible implementations of the third aspect may be implemented.

According to a ninth aspect, an embodiment of this application provides a computer program product including instructions. When the instructions are run on a computer, the computer is enabled to perform the method according to any one of the first aspect or the possible implementations of the first aspect, the computer is enabled to perform the method according to any one of the second aspect or the possible implementations of the second aspect, or the computer is enabled to perform the method according to any one of the third aspect or the possible implementations of the third aspect.

According to a tenth aspect, an embodiment of this application provides a chip system. The chip system includes a processor, configured to support a device in implementing functions in the first aspect, configured to support a device in implementing functions in the second aspect, or configured to support a device in implementing functions in the third aspect.

In a possible design, the chip system further includes a memory. The memory is configured to store necessary program instructions and data. The chip system may include a chip, or may include a chip and another discrete component.

According to an eleventh aspect, an embodiment of this application further provides a chip system. The chip system includes a processor and an interface. The interface is configured to obtain a program or instructions. The processor is configured to invoke the program or the instructions to implement or support a device in implementing functions in the first aspect, the processor is configured to invoke the program or the instructions to implement or support a device in implementing functions in the second aspect, or the processor is configured to invoke the program or the instructions to implement or support a device in implementing functions in the third aspect.

In a possible design, the chip system further includes a memory. The memory is configured to store program instructions and data that are necessary for a terminal device. The chip system may include a chip, or may include a chip and another discrete component.

BRIEF DESCRIPTION OF DRAWINGS

FIG. 1 is a diagram of an architecture of a keyless secure transmission system used in this application;
FIG. 2 is a diagram of an architecture of a mobile communication system used in an embodiment of this application;
FIG. 3 is a diagram of a controlled area according to this application;
FIG. 4 is a diagram of a randomness extractor according to this application;
FIG. 5 is an overview flowchart of a communication method according to this application;
FIG. 6 is an overview flowchart of another communication method according to this application;
FIG. 7 is an overview flowchart of still another communication method according to this application;
FIG. 8 is a first diagram of a structure of a communication apparatus according to this application; and
FIG. 9 is a second diagram of a structure of a communication apparatus according to this application.

DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application. The terms "first" and "second", corresponding term numbers, and the like in the specification, the claims, and the accompanying drawings of this application are intended to distinguish between similar objects, and are not necessarily intended to describe a specific sequence or order. It should be understood that the terms used in such a way are interchangeable in appropriate circumstances, and this is merely a discrimination manner that is used when objects having a same attribute are described in embodiments of this application. In addition, the terms "include", "contain", and any other variants mean to cover non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

The technical solutions provided in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or a new radio (new radio, NR) mobile communication system, a wireless local area network (wireless local area network, WLAN) system, and a wireless fidelity (wireless fidelity, Wi-Fi) system. The 5G mobile communication system may be non-standalone (non-standalone, NSA) or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an Internet of things (Internet of things, IoT) network, or another network. The IoT network may include, for example, an Internet of vehicles. Communication modes in an Internet of vehicles system are collectively referred to as vehicle to X (vehicle to X, V2X, where X may stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application. In addition, the terms "system" and "network" are interchangeable.

Network elements in this application include a network device and a terminal device. A method provided in embodiments of this application may be implemented by using program code in a memory. A method applied to a network device side may run in a processing chip or any apparatus having a communication, computing, and storage function in the network device, or may run in any processing device installed on the network device side. A method applied to a terminal device side runs in a built-in processing chip or any apparatus having a communication, computing, and storage function in the terminal device.

The network device in this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, where the RAN node may also be referred to as an access network device. In embodiments of this application, an apparatus configured to implement a function of the network device may be a network device, may be a module or a unit that can be used in a network device, or may be an apparatus, for example, a chip system, that can support a network device in implementing the function. The apparatus may be installed in the network device or used in collaboration with the network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like; may be a network device in a 5G mobile communication system, for example, a next generation NodeB (next generation NodeB, gNB), a transmission reception point (transmission reception point, TRP), or a TP in an NR system; or may be one antenna panel or one group of antenna panels (including a plurality of antenna panels) in a 5G mobile communication system. Alternatively, the network device may be a network node, for example, a BBU or a distributed unit (distributed unit, DU), included in a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and an active antenna related function. Information at the RRC layer is finally changed to information at the PHY layer, or is changed from information at the PHY layer. Therefore, in this architecture, higher layer signaling (for example, RRC layer signaling) may also be considered as being sent by the DU or sent by the DU and the AAU. It may be understood that the network device may be a device including one or more of a CU node, a DU node, and an AAU node. In addition, the CU may be classified as a network device in a RAN or a network device in a core network (core network, CN). This is not limited in this application.

The terminal device in this application may be a wireless terminal device that can receive scheduling and indication information of the network device. The terminal device may be a device that provides a user with voice and/or data connectivity, a handheld device having a wireless connection function, or another processing device connected to a wireless modem. In embodiments of this application, an apparatus configured to implement a function of the terminal device may be a terminal device, may be a module or a unit that can be used in a terminal device, or may be an apparatus, for example, a chip system, that can support a terminal device in implementing the function. The apparatus may be installed in the terminal device or used in collaboration with the terminal device.

The terminal device is also referred to as user equipment (user equipment, UE), a mobile station (mobile station, MS), a mobile terminal (mobile terminal, MT), or the like. The terminal device is a device that includes a wireless communication function (providing the user with the voice/data connectivity), for example, the handheld device or a vehicle-mounted device having the wireless connection function. Currently, some examples of the terminal device are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in an Internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the Internet of vehicles may be a vehicle-mounted device, an entire vehicle device, an in-vehicle module, or a vehicle. The wireless terminal in the industrial control may be a camera, a robot, or the like. The wireless terminal in the smart home may be a television, an air conditioner, a sweeper robot, a speaker, a set-top box, or the like.

FIG. 2 is a diagram of a communication system 200 usable in an embodiment of this application. As shown in FIG.

2, the communication system 200 may include at least one network device, for example, a network device 210 shown in FIG. 2. The communication system 200 may further include at least one terminal device, for example, a terminal device 220 shown in FIG. 2. The network device 210 and the terminal device 220 may communicate with each other through a radio link. A plurality of antennas may be configured for each communication device, for example, the network device 210 or the terminal device 220. For each communication device in the communication system, the plurality of configured antennas may include at least one sending antenna configured to send a signal and at least one receiving antenna configured to receive a signal. Therefore, the communication devices in the communication system, for example, the network device 210 and the terminal device 220, may communicate with each other by using a multi-antenna technology.

It should be understood that FIG. 2 is merely a simplified diagram used as an example for ease of understanding. The communication system may further include another network device or another terminal device that is not shown in FIG. 2.

It should be further understood that the communication system 200 shown in FIG. 2 is merely an example of an application scenario of embodiments of this application. This application may be further applied to communication between any two devices, for example, communication between terminal devices or communication between network devices.

The following describes technical concepts in this application.

1. Keyless secure transmission system

FIG. 1 is a schematic flowchart of data transmission in the keyless secure transmission system. As shown in FIG. 1, to-be-sent first data is preprocessed, and then is sent from a sending end to a receiving end through a radio channel after a channel encoding procedure, a waveform/modulation procedure, and a multiple-input multiple-output (multiple-input multiple-output, MIMO) procedure are sequentially performed. Data received by the receiving end is post-processed after a MIMO procedure, a waveform/demodulation procedure, and a channel decoding procedure are sequentially performed, to obtain the to-be-sent first data. The post-processing may be understood as an inverse operation of the preprocessing.

A channel between the sending end and the receiving end is a legitimate channel, and the receiving end may also be referred to as a legitimate receiving end or a target receiving end of the first data. A channel between the sending end and a non-target node is an illegitimate channel. In other words, the non-target node is an illegitimate receiving end or a non-target receiving end of the first data. It should be understood that the non-target node may be a device that physically exists, or may be an assumed device.

For example, random entropy may be introduced on the illegitimate channel by using a physical-layer secure transmission technology, to create a very high error floor at the non-target node. On this basis, a preprocessing module (namely, a randomness extractor) may extract and spread the random entropy introduced on the illegitimate channel by using the physical-layer secure transmission technology, to obtain equivalent keys that are approximately evenly distributed, so that each bit in an information bit group achieves provable security strength.

2. Error floor

In this application, an error floor of a cell is a smallest bit error rate in a bit error rate of any location that is within a coverage area of the cell and that is outside a controlled area.

The error floor of the cell herein may be understood as an error floor determined by the cell and a specific terminal device, or may be understood as an error floor introduced at a non-target node because the cell and the specific terminal device use the physical-layer security technology. It can be learned that the error floor is jointly determined by the cell and the specific terminal device, in other words, is jointly determined by both communication parties.

For example, an error floor determined by a cell A and a terminal #1 may be the same as or different from an error floor determined by the cell A and a terminal #2.

The controlled area is an area in which no non-target node exists. The controlled area may be a range centered on a terminal device, and a size of the controlled area is related to an actual scenario. For example, the controlled area may be a closed campus in which the terminal device is located, or a room, a factory, or an automobile in which the terminal device is located. For another example, if the terminal device is worn on a user, it may be considered that there is no non-target node within some ranges, for example, within 1 m.

After the controlled area is determined, the bit error rate of any location that is within the coverage area of the cell and that is outside the controlled area needs to be determined, and the smallest bit error rate in the bit error rate is used as the error floor of the cell. In addition, a location corresponding to the smallest bit error rate is used as an optimal location of the non-target node. To be specific, if the non-target node is in the location, the non-target node can achieve optimal obtaining performance or best receiving performance, and can obtain a largest amount of information.

The following uses the cell A and the terminal #1 as an example to describe how the cell A determines an error floor of the cell A, to be specific, how to determine the error floor determined by the cell A and the terminal #1.

The cell A first determines a controlled area. As shown in FIG. 3, the terminal #1 is in a specific room, and generally, there is no non-target node in a room. Therefore, the room may be considered as the controlled area. The terminal #1 is located in the controlled area, and a non-target node is located outside the controlled area.

The cell A determines, according to a preset physical-layer secure transmission scheme, a bit error rate (Bit Error Rate, BER) of any location that is within a coverage area of the cell A and that is outside the controlled area. For example, the cell A may determine, by using a preset deduction solution or a preset simulation solution, the BER of any location that is within the coverage area of the cell A and that is outside the controlled area.

Further, the cell A denotes a location corresponding to a smallest BER in the obtained BER of any location as an optimal obtaining point, and denotes the BER (namely, the smallest BER) of the location as $p_e$, where $p_e$ represents the error floor of the cell, and is for describing optimal obtaining performance that can be achieved by the non-target node outside the controlled area. In other words, if the non-target node is in the location corresponding to $p_e$, the non-target node obtains a largest amount of information.

It should be understood that an error floor of a specific cell may be determined by the cell or a specific terminal device. This application is not limited thereto. The foregoing uses the example in which the cell A determines the error floor of the cell A. The error floor of the cell A may alternatively be determined by the terminal #1. For a manner in which the terminal #1 determines the bit error rate of the cell A, refer to the manner in which the cell A determines the error floor of the cell A. Details are not described herein.

It should be further understood that, during actual application, it is extremely difficult to obtain an error floor of a cell. Therefore, determining an error floor of a cell may also be understood as that the cell or a specific terminal device estimates the error floor of the cell.

3. Degree of approaching

This application provides two performance indicators, namely, a first degree of approaching and a second degree of approaching, for evaluating security of a keyless secure transmission system. The two performance indicators may also be for evaluating security of other various secure communication schemes, and are general performance indicators.

The first degree of approaching may also be referred to as a degree of approaching to a one-time pad, and may be described as a degree of approaching of security of a current secure communication scheme relative to security of a one-time pad-based security scheme or a difference of security of a current secure communication scheme from security of a one-time pad-based security scheme.

For example, the first degree of approaching is a ratio of key entropy needed for encrypting information entropy to the information entropy.

A method for calculating the first degree of approaching is shown in a formula (1):

$$\text{First degree of approaching (D)} = \frac{\text{Key entropy } (E_K)}{\text{Information entropy } (E_M)} \quad (1)$$

A specific calculation process is as follows:

Step A: Generate a random bit sequence, and calculate key entropy based on a length of the random bit sequence.

The random bit sequence may be distributed by a higher layer of a network. For example, the random bit sequence may be distributed based on a root key. Alternatively, the random bit sequence may be generated based on randomness extracted from a channel or a hardware device. Alternatively, the random bit sequence may be generated based on a BER introduced at a non-target node by using a physical-layer security technology. It should be noted that in this application, an algorithm for generating the random bit sequence may also be referred to as a key generation algorithm.

In this application, the random bit sequence may be generated based on the BER introduced at the non-target node by using the physical-layer security technology.

Further, minimum entropy $H_K$ per bit in the random bit sequence may be evaluated by using the National Institute of Standards and Technology (National Institute of Standards and Technology, NIST) SP800-90B or another method, and the key entropy $E_K$ may be obtained by multiplying the length of the random bit sequence by $H_K$.

Step B: Calculate information entropy $E_M$ based on distribution of symbols sent by a source in a communication system and a length of an information bit sequence.

The distribution of the symbols sent by the source affects generation of the information entropy of the information bit sequence. For example, it is assumed that a symbol generated by the source has two possibilities: 0 and 1. If the possibilities of generating 0 and 1 are equal, entropy of a binary symbol generated by the source is 1 bit/symbol. However, if the possibilities of generating 0 and 1 are not equal, entropy of a binary symbol generated by the source is less than 1 bit/symbol.

Step C: Calculate a first degree of approaching according to the formula (1).

It can be learned from the foregoing formula (1) that the first degree of approaching has the following properties:

(1) A reciprocal of the first degree of approaching represents information entropy that can be protected by each bit of key entropy or a quantity of information bits that can be protected by each bit of key entropy.
(2) It should be noted that security of a security algorithm or a security scheme depends on two aspects: algorithm complexity and key freshness, where the key freshness may be measured by using a key update frequency.

For example, for a higher-layer encryption algorithm, key freshness is low when a root key remains unchanged for a long period of time. For example, the root key is updated once a day, in other words, a same root key is used in one day. Therefore, the key freshness is low. Security of the higher-layer encryption algorithm depends on algorithm complexity. For the higher-layer encryption algorithm, a first degree of approaching is close to 0. The root key is a key stored in a universal subscriber identity module (universal subscriber identity module, USIM) card of a terminal device when the terminal device performs registration before accessing a network.

For example, for the one-time pad-based security scheme, because a random bit sequence and an information bit sequence are synchronously updated, and each bit in the random bit sequence is used only once, key freshness is highest. An encryption algorithm, namely, bitwise exclusive OR, in the one-time pad-based security scheme is simple. Therefore, the security of the one-time pad-based security scheme depends on the key freshness. For the one-time pad-based security scheme, a first degree of approaching is 1.

(3) The first degree of approaching is also a measure for security strength of the communication system. A higher first degree of approaching indicates higher security strength. In the formula (1), for a given denominator, a higher first degree of approaching indicates larger key entropy, and therefore indicates more difficult key cracking. In addition, for a given numerator, a higher first degree of approaching indicates less information entropy protected by each bit of key entropy, and therefore indicates less information that is leaked because a key is obtained.

The second degree of approaching may also be referred to as a degree of synchronous approaching to a one-time pad.

For example, the second degree of approaching is a ratio of key entropy extracted per unit time to information entropy communicated per unit time.

A method for calculating the second degree of approaching is shown in a formula (2).

$$\text{Second degree of approaching } (d) = \frac{\text{Key entropy } (R_K) \text{ extracted per unit time}}{\text{Information entropy } (R_M) \text{ communicated per unit time}} \quad (2)$$

A specific calculation process is as follows:
Step a: Generate a random bit sequence, and calculate, based on a generation rate of the random bit sequence, key entropy extracted per unit time.

For a process of generating the random bit sequence and minimum entropy $H_K$ per bit, refer to related descriptions in step A. Further, the key entropy $R_K$ extracted per unit time may be obtained by multiplying the generation rate of the random bit sequence by $H_K$, and the key entropy $R_K$ extracted per unit time may also be referred to as a generation rate of the key entropy.

Step b: Measure or estimate information entropy $R_M$ communicated per unit time, where the information entropy communicated per unit time may also be referred to as an information transmission rate or a transmission rate of an information bit sequence.

Step c: Calculate a second degree of approaching according to the formula (2).

It can be learned from the foregoing formula (2) that the second degree of approaching has the following properties:

(1) The second degree of approaching is a measure for a capability to approach the one-time pad-based security scheme. On a premise that the information transmission rate is given, a higher first degree of approaching indicates a higher rate at which a communication system generates the key entropy, in other words, the communication system has a higher capability to implement high security that matches the information transmission rate.
(2) The second degree of approaching may also be for describing efficiency of approaching the one-time pad-based security scheme. For a given first degree of approaching (namely, a given security strength requirement), a higher second degree of approaching indicates a higher ratio of a transmission time period for the information bit sequence to a generation time period for the key entropy, and therefore indicates fewer additional time overheads introduced to implement the first degree of approaching, namely, a shorter generation time period for the key entropy.

Specifically, it can be learned from the formula (2) that:

$$\text{Second degree of approaching } (d) =$$

$$\frac{\text{Key entropy } (R_K) \text{ extracted per unit time}}{\text{Information entropy } (R_M) \text{ communicated per unit time}} \qquad \frac{\text{Generation rate of key entropy}}{\text{Transmission rate of an information bit sequence}} =$$

$$\frac{\text{Generation rate of a random bit sequence} * H_K}{\text{Transmission rate of an information bit sequence}}$$

For example, assuming that key entropy included in a random bit sequence is m1, and duration for generating the random bit sequence (which may also be referred to as a generation time period for the key entropy) is t1, a generation rate of the key entropy is m1/t1; and assuming that a length of an information bit sequence encrypted by using the random bit sequence is m2, and duration for communicating the information bit sequence (which may also be referred to as a transmission time period for the information bit sequence) is t2, a transmission rate of the information bit sequence is m2/t2. In this case, the second degree of approaching is equal to (m1/m2)*(t2/t1). Therefore, when m1/m2 is given, a higher second degree of approaching indicates larger t2/t1, namely, a larger ratio of the transmission time period for the information bit sequence to the generation time period for the key entropy, where m1 is less than or equal to m2.

For the keyless secure transmission system, there is no explicit key generation and interaction process, and random bit errors introduced through physical-layer transmission are used as the equivalent keys. Therefore, key extraction and information transmission are synchronous. Therefore, in the keyless secure transmission system, the first degree of approaching is the same as the second degree of approaching. In the following descriptions, the two terms are not distinguished, and are collectively referred to as the degree of approaching.

For the keyless secure transmission system, because there is no explicit key generation and interaction process, this secure transmission architecture is also referred to as an implicit-encryption based secure transmission architecture. The following describes a process of calculating the degree of approaching by using calculation of the second degree of approaching as an example.

A method for calculating the second degree of approaching is specifically as follows:

Assuming that a length of an information bit sequence is L bits, and a transmission time period for the information bit sequence is T seconds, because the key extraction and the information transmission are synchronous, a length of a random bit sequence is also L bits, and duration for generating the random bit sequence (where the duration may also be referred to as a generation time period for key entropy) is also T seconds. The length of the information bit sequence herein may also be referred to as a length of a data group, where the data group is a to-be-communicated source message group.

Further, minimum entropy per bit brought by bit errors introduced at a non-target node by using a physical-layer security technology is $H_\infty(X|Z)$. In this case, minimum entropy (namely, key entropy) that is for each data group and that is introduced at the non-target node by using the physical-layer security technology is $H_\infty(X|Z) \times L$ bits, where the $H_\infty(X|Z) \times L$ bits are a length of equivalent keys in one data group. It can be learned based on the definition of the second degree of approaching that the second degree of approaching is equal to:

$$d = \frac{H_\infty(X|Z) \times L/T}{L/T} = H_\infty(X|Z) \quad (3)$$

$H_\infty(X|Z) \times L$ represents the key entropy in the keyless secure transmission system, and $L$ represents channel entropy in the keyless secure transmission system. $H_\infty(X|Z) \times L/T$ represents key entropy extracted per unit time in the keyless secure transmission system, and $L/T$ represents channel entropy communicated per unit time in the keyless secure transmission system.

Scenario 1:

If a specific structure of the preprocessing module (namely, the randomness extractor) is not given, an upper bound of the second degree of approaching may be deduced as:

$$d = H_\infty(X|Z) \le \log\frac{1}{1-p_e} \quad (4)$$

$p_e$ represents an error floor determined by the sending end and the receiving end.

A process of deducing an upper bound of a degree of approaching in the keyless secure transmission system is as follows:

A typical three-node illegitimate channel model is considered. An input of a channel is X, and observation of X by the non-target node is denoted as Z. To evaluate whether security strength achieved by a physical-layer security scheme is sufficiently high, it needs to be evaluated whether minimum entropy introduced at the non-target node by using the physical-layer security scheme is greater than a specific threshold, in other words,

$$H_\infty(X|Z) > h, \quad (A1)$$

h is a threshold related to the security strength. In the following deduction, the foregoing minimum entropy condition is converted to an error probability condition.

It can be learned according to the Rényi entropy theory that:

$$H_\alpha(X|Z) = H_\alpha(X) - I_\alpha(X;Z), \quad (A2)$$

In other words,

$$H_\alpha(X) = H_\alpha(X|Z) + I_\alpha(X;Z), \quad (A3)$$

According to the generalized Fano inequality, an upper bound of $H_\alpha(X)$ is:

$$H_\alpha(X) \leq H_\alpha(X|\hat{X}) + I_\alpha(X;Z) \leq \frac{1}{1-\alpha} \log\big((1-p_e)^\alpha + (M-1)^{1-\alpha}p_e^\alpha + I_\alpha(X;Z)\big) \quad (A4)$$

$p_e$ represents the error floor introduced at the non-target node, and a cardinality of a set to which X belongs is M.

Assuming that $\alpha > 1$ is true (because in the deduction made herein, the minimum entropy is considered, and the minimum entropy corresponds to a case in which $\alpha$ is equal to infinity, this assumption is reasonable), the formula (A4) may be re-expressed as:

$$2^{(1-\alpha)[H_\alpha(X)-I_\alpha(X;Z)]} \geq (1-p_e)^\alpha + (M-1)^{1-\alpha}p_e^\alpha \geq (1-p_e)^\alpha \quad (A5)$$

Therefore,

$$p_e \geq 1 - 2^{\frac{1-\alpha}{\alpha}[H_\alpha(X)-I_\alpha(X;Z)]} = 1 - 2^{\frac{1-\alpha}{\alpha}H_\alpha(X|Z)} \quad (A6)$$

Assuming that $\alpha \to \infty$, $H_\alpha(X|Z)$ is changed to $H_\infty(X|Z)$ (namely, the minimum entropy), and the formula (A6) may be expressed as:

$$d = H_\infty(X|Z) \leq \log\frac{1}{1-p_e} \quad (A7)$$

It is clear that when $H_\infty(X|Z) > h$, an error probability should satisfy $p_e \geq 1 - 2^{-h}$. The formula (A7) is the upper bound of the degree of synchronous approaching.

Scenario 2:

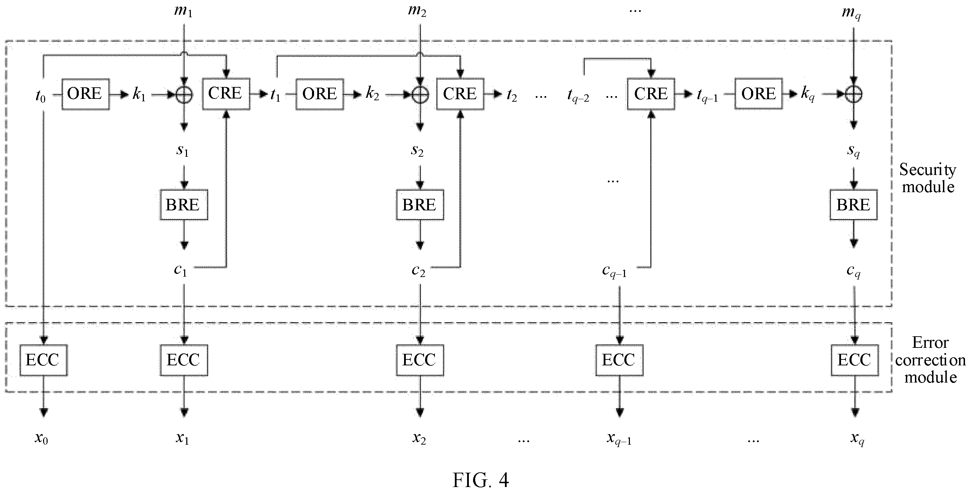

For a given preprocessing module (namely, a given randomness extractor), a specific value of the second degree of approaching may be calculated. For example, for a randomness extractor shown in FIG. 4, a second degree of approaching is:

$$d = \frac{\lambda}{L} \quad (5)$$

$\lambda$ represents a security level, L represents a length of a data group, and L should satisfy $L \geq \dfrac{\lambda}{\log \frac{1}{1-p_e}}$.

Specifically, $\lambda$ is a security level of communication between the sending end and the receiving end, and may be understood as calculation complexity generated by obtaining, by the non-target node through brute force cracking, data sent by the sending end. For example, if the security level of the communication between the sending end and the receiving end is 128, it indicates that the non-target node needs to perform brute force cracking for $2^{128}$ times, in other words, $2^{128}$ calculations need to be performed for cracking by using a best attack algorithm.

A basic feature of the randomness extractor shown in FIG. 4 is as follows: In FIG. 4, $m_1$, $m_2$, ..., and $m_q$ represent to-be-communicated source message groups, and $x_1$, $x_2$, ..., and $x_q$ represent encoded groups output by a channel encoder, where q is a positive integer, and $m_i$ corresponds to $x_i$.

An error correction module includes a plurality of error control coding (error control coding, ECC) modules. The ECC module is a channel encoding module in FIG. 1, and may use various codes, for example, a low-density parity check (low-density parity check, LDPC) code or a polar (polar) code, widely used in a communication system. The ECC module is not a component of the randomness extractor. The error correction module is drawn herein merely for integrity of composition.

A function of randomness extraction is implemented by a security module in FIG. 4, where the security module includes a one-way entropy extractor (one-way randomness extractor, ORE), a bi-directional entropy extractor (bi-directional randomness extractor, BRE), and a compressive entropy extractor (compressive randomness extractor, CRE), and $t_0$ is an initial random vector.

An operating principle of the randomness extractor is as follows: In a group, random entropy introduced on an illegitimate channel is extracted and spread through the BRE, to protect all bits in the group, to be specific, random bit errors introduced by using a physical-layer security technology are spread in the group. Among a plurality of groups, channel noise entropy of a preceding group is accumulated through the CRE and the ORE, to avoid a problem that a part of groups cannot achieve required security strength due to insufficient random entropy introduced on a channel. In other words, even if a channel condition of an illegitimate channel in a specific group is good, and therefore sufficient random entropy cannot be introduced in the current group by using a physical-layer security technology, channel noise entropy in a preceding group can still be collected through the CRE and the ORE, and random bit errors introduced by the channel noise entropy are aggregated and spread to the current group.

It can be learned that the security of the keyless secure transmission system can be evaluated by using the degree of approaching.

When the specific structure of the randomness extractor is not given, in other words, in the scenario 1, the upper bound of the security strength of the system can be analyzed by using the proposed calculation method, and a value of the upper bound is only related to the error floor pe introduced by using the physical-layer security technology.

When the specific structure of the randomness extractor is given, in other words, in the scenario 2, the security strength that can be achieved by the system can be accurately described by using the proposed calculation method. In addition, a physical-layer secure transmission scheme may be designed by using the indicator.

Specifically, it may be obtained according to the formula (4) that:

$$p_e \geq 1 - 2^{-d} \qquad (6)$$

Therefore, if the degree of approaching d is required to reach a specific level h, the error floor $p_e$ introduced at the non-target node by using the physical-layer security technology should satisfy $p_e \geq 1 - 2^{-h}$, and the design of the physical-layer secure transmission scheme should meet the requirement. If the design of the physical-layer secure transmission scheme does not meet the requirement, a preset security strength requirement cannot be met.

It may be obtained according to the formula (5) that:

$$p_e \geq 1 - 2^{-\frac{\lambda}{L}}$$

Therefore, if the security level $\lambda$ is required to reach $\lambda_0$, the error floor $p_e$ introduced at the non-target node by using the physical-layer security technology should satisfy $p_e \geq 1 - 2^{-\frac{\lambda}{L}}$, and the design of the physical-layer secure transmission scheme should meet the requirement. If the design of the physical-layer secure transmission scheme does not meet the requirement, a preset security strength requirement cannot be met.

A process of deducing $p_e \geq 1 - 2^{-\frac{\lambda}{L}}$ is as follows:

When $d = \frac{\lambda}{L}$, $\lambda \geq \lambda_0$ needs to be equivalent to $d \geq \frac{\lambda_0}{L}$, in other words,

$$H_\infty(X|Z) \geq \frac{\lambda_0}{L} \quad (B1)$$

$p_e$ and the minimum entropy satisfy the following relationship: $H_\infty(X|Z) \leq log \frac{1}{1-p_e}$, in other words,

$$p_e \geq 1 - 2^{-H_\infty(X|Z)} \quad (B2)$$

Therefore, to meet a user security level requirement provided in the formula (B1), $p_e$ should satisfy:

$$p_e \geq 1 - 2^{-\frac{\lambda_0}{L}} \quad (B3)$$

Based on this, this application provides a communication method. The method may be applied to a cell reselection scenario. A terminal device may receive an error floor of a serving cell from the serving cell, and start cell reselection when determining that the error floor of the serving cell is less than a preset threshold, where the preset threshold is determined based on a preset security parameter, and the preset security parameter includes a preset degree of approaching or a preset security level.

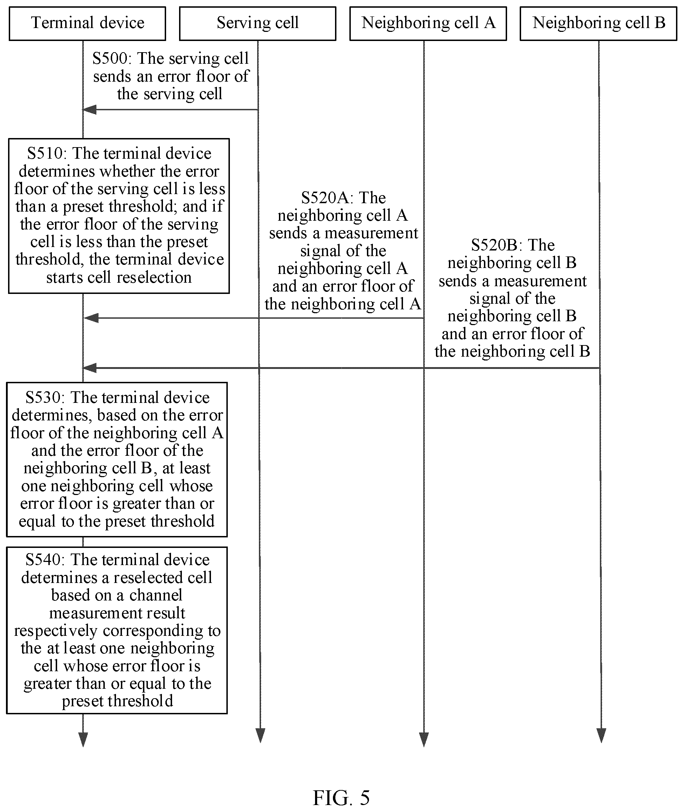

The following describes the foregoing cell reselection process with reference to FIG. 5.

S500: The serving cell sends the error floor of the serving cell. Correspondingly, the terminal device receives the error floor of the serving cell from the serving cell.

For example, the serving cell may broadcast the error floor of the serving cell, or send the error floor of the serving cell to the terminal device by using other signaling. This is not limited in this application. The serving cell may determine the error floor determined by the serving cell and the terminal device. For a manner of determining the error floor of the serving cell, refer to the foregoing related descriptions. Details are not described herein again.

S510: The terminal device determines whether the error floor of the serving cell is less than the preset threshold; and if the error floor of the serving cell is less than the preset threshold, the terminal device starts the cell reselection.

For example, the preset threshold is determined based on the preset security parameter, and the preset security parameter includes the preset degree of approaching or the preset security level. The preset security parameter may be determined by the terminal device, or may be determined by the terminal device through negotiation with the serving cell. A manner of determining the preset security parameter is not limited in this application.

In a possible embodiment, when the terminal device determines whether the error floor of the serving cell is less than the preset threshold, there may be specifically the following two cases:

Case 1: The preset security parameter includes the preset degree of approaching, and the preset threshold is $1 - 2^{-d_0}$, where $d_0$ represents the preset degree of approaching.

The terminal device determines whether the error floor of the serving cell is less than $1 - 2^{-d_0}$. If the error floor of the serving cell is less than $1 - 2^{-d_0}$, S520 continues to be performed. If the error floor of the serving cell is greater than or equal to $1 - 2^{-d_0}$, the terminal device determines, based on a cell reselection start condition in an existing protocol procedure, whether to start the cell reselection.

Case 2: When the preset security parameter includes the preset security level, the preset threshold is $1 - 2^{-\frac{\lambda 0}{L}}$, where $\lambda_0$ represents the preset security level, and L represents a length of a data group.

Refer to the deduction process in the foregoing scenario 2. When the preprocessing module is the randomness extractor shown in FIG. 4, the degree of approaching is a ratio of the preset security level to the length of the data group. In other words, in this case, the degree of approaching may be represented by the ratio of the preset security level to the length of the data group.

The terminal device determines whether the error floor of the serving cell is less than $1 - 2^{-\frac{\lambda 0}{L}}$. If the error floor of the serving cell is less than $1 - 2^{-\frac{\lambda 0}{L}}$, S520 continues to be performed. If the error floor of the serving cell is greater than or equal to $1 - 2^{-\frac{\lambda 0}{L}}$, the terminal device determines, based on a cell reselection start condition in an existing protocol procedure, whether to start the cell reselection.

For example, when the terminal device starts the cell reselection, the terminal device sends indication information to the serving cell, where the indication information indicates that the error floor of the serving cell is less than the preset threshold. Further, the serving cell sends measurement configuration information to the terminal device based on the indication information, where the measurement configuration information indicates configuration information for a measurement signal of each of a plurality of neighboring cells, so that the terminal device measures, based on the measurement configuration information, the measurement signal respectively sent by the plurality of neighboring cells, to obtain a channel measurement result for each neighboring cell.

S520A: A neighboring cell A sends a measurement signal of the neighboring cell A and an error floor of the neighboring cell A.

In other words, the neighboring cell A broadcasts the measurement signal of the neighboring cell A and the error floor of the neighboring cell A.

S520B: A neighboring cell B sends a measurement signal of the neighboring cell B and an error floor of the neighboring cell B.

In other words, the neighboring cell B broadcasts the measurement signal of the neighboring cell B and the error floor of the neighboring cell B.

For example, each neighboring cell determines an error floor determined by the neighboring cell and the terminal device, and the error floor is referred to as an error floor of the neighboring cell. For a manner of determining the error floor of the neighboring cell, refer to the foregoing related descriptions. Details are not described herein again.

It should be noted that the error floor and the measurement signal of each cell may be sent together or separately. This is not limited in this application. The measurement signal may be a synchronization signal block (synchronization signal block, SSB) or a channel state information-reference signal (channel state information-reference signal, CSI RS), or may be a new measurement signal defined in a future 6G system. This is not limited in this application.

An example in which the plurality of neighboring cells include the neighboring cell A and the neighboring cell B is merely used in FIG. 5 for description.

S530: The terminal device determines, based on the error floor of the neighboring cell A and the error floor of the neighboring cell B, at least one neighboring cell whose error floor is greater than or equal to the preset threshold.

For example, before the terminal device generates a channel measurement result based on a measurement signal of any one of the plurality of neighboring cells, the terminal device may first determine whether an error floor of the neighboring cell is greater than or equal to the preset threshold. If the error floor of the neighboring cell is greater than or equal to the preset threshold, the terminal device generates the channel measurement result for the neighboring cell. If the error floor of the neighboring cell is less than the preset threshold, the terminal device may not need to generate the channel measurement result for the neighboring cell. The terminal device may determine, through the foregoing process, the at least one neighboring cell whose error floor is greater than or equal to the preset threshold in the plurality of neighboring cells.

S540: The terminal device determines a reselected cell based on a channel measurement result respectively corresponding to the at least one neighboring cell whose error floor is greater than or equal to the preset threshold, where the reselected cell is one of the at least one neighboring cell whose error floor is greater than or equal to the preset threshold.

For example, the terminal device may measure, based on the received measurement configuration information, a channel between each neighboring cell and the terminal device by using a measurement signal sent by the neighboring cell, to generate a channel measurement result for the neighboring cell. Further, the terminal device may determine the reselected cell based on an existing protocol and the channel measurement result respectively corresponding to the at least one neighboring cell whose error floor is greater than or equal to the preset threshold.

In addition, in a possible design, the terminal device may further update the preset security parameter if the terminal device determines, based on the error floors respectively corresponding to the plurality of neighboring cells, that no neighboring cell whose error floor is greater than or equal to the preset threshold exists, to update the preset threshold. Further, the terminal device may determine, based on the error floors respectively corresponding to the plurality of neighboring cells, at least one neighboring cell whose error floor is greater than or equal to an updated preset threshold in the plurality of neighboring cells, where the updated preset threshold is determined based on an updated preset security parameter. Then, the terminal device performs S540 again, in other words, determines a reselected cell based on a channel measurement result respectively corresponding to the at least one neighboring cell whose error floor is greater than or equal to the updated preset threshold, where the reselected cell is one of the at least one neighboring cell whose error floor is greater than or equal to the updated preset threshold.

Further, after S540, the terminal device may start to receive a system message of the reselected cell. If there is no access restriction, the terminal device camps on the cell.

In an existing cell reselection solution, cell reselection is performed based on an indicator, for example, a channel condition or a communication resource, related to communication quality without considering a communication security requirement of a terminal device. In the method shown in FIG. 5, the terminal device starts the cell reselection when the error floor of the serving cell is less than the preset threshold determined based on the preset security parameter.

Therefore, the cell reselection is started in consideration of a communication security requirement of the terminal device. Further, the terminal device determines, based on the preset security parameter and the error floors of the plurality of neighboring cells, a neighboring cell that meets the communication security requirement, and further evaluates, with reference to the existing protocol, whether to perform cell reselection, so that the communication security requirement of the terminal device can be met.

This application further provides a communication method. The method may be applied to a cell handover scenario. A serving cell receives a preset security parameter from a terminal device, and sends the preset security parameter to a plurality of neighboring cells, where the preset security parameter includes a preset degree of approaching or a preset security level. When the serving cell needs to be switched, the serving cell receives a measurement report from the terminal device, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter. Further, the serving cell determines a target cell based on the measurement report, where an error floor of the target cell is greater than or equal to the preset threshold.

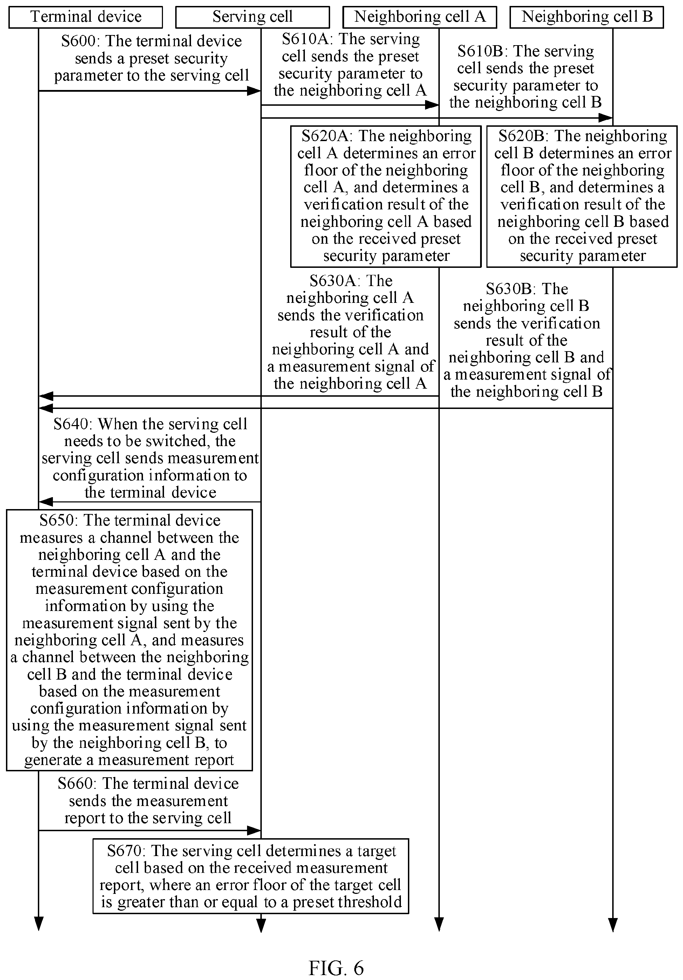

The following describes the foregoing cell handover process with reference to FIG. 6.

S600: The terminal device sends the preset security parameter to the serving cell, where the preset security parameter includes the preset degree of approaching or the preset security level.

S610A: The serving cell sends the preset security parameter to a neighboring cell A.

S610B: The serving cell sends the preset security parameter to a neighboring cell B.

For example, the serving cell separately sends the preset security parameter to the plurality of neighboring cells. An example in which the plurality of neighboring cells include the neighboring cell A and the neighboring cell B is merely used in FIG. 6 for description.

In a possible implementation, when the serving cell determines that the serving cell needs to be switched, the serving cell separately sends the preset security parameter to the plurality of neighboring cells.

For example, that the serving cell needs to be switched may mean: The serving cell determines that an error floor of the serving cell is less than the preset threshold, to be specific, the serving cell does not meet a communication security requirement of the terminal device. Alternatively, the serving cell determines that an error floor of the serving cell is greater than or equal to the preset threshold, but the serving cell meets a preset condition, to be specific, the serving cell meets a communication security requirement of the terminal device, and meets a determining condition for triggering the cell handover. The preset condition herein is a determining condition that is specified in an existing protocol and that is for triggering the cell handover.

In an example, when the preset security parameter includes the preset security level, the preset threshold is

$$1 - 2^{-\frac{\lambda_0}{L}}$$, where $\lambda_0$ represents the preset security level, and L represents a length of a data group. The preset degree of approaching is a ratio of the preset security level to the length of the data group.

In another example, when the preset security parameter includes the preset degree of approaching, the preset threshold is $1 - 2^{-d_0}$, where $d_0$ represents the preset degree of approaching.

In another possible implementation, the serving cell may alternatively send the preset security parameter to the plurality of neighboring cells in advance. In other words, even if the serving cell does not need to be switched, the serving cell may also separately send the preset security parameter to the plurality of neighboring cells.

S620A: The neighboring cell A determines an error floor of the neighboring cell A, and determines a verification result of the neighboring cell A based on the received preset security parameter.

For example, the verification result of the neighboring cell A indicates whether the error floor of the neighboring cell A is greater than or equal to the preset threshold. If the error floor is greater than or equal to the preset threshold, it indicates that the neighboring cell A can meet the communication security requirement of the terminal device. If the error floor is less than the preset threshold, the neighboring cell A does not meet the communication security requirement of the terminal device.

S620B: The neighboring cell B determines an error floor of the neighboring cell B, and determines a verification result of the neighboring cell B based on the received preset security parameter.

For example, the verification result of the neighboring cell B indicates whether the error floor of the neighboring cell B is greater than or equal to the preset threshold. If the error floor is greater than or equal to the preset threshold, it indicates that the neighboring cell B can meet the communication security requirement of the terminal device. If the error floor is less than the preset threshold, the neighboring cell B does not meet the communication security requirement of the terminal device.

S630A: The neighboring cell A sends the verification result of the neighboring cell A and a measurement signal of the neighboring cell A.

For example, the neighboring cell A may broadcast the verification result of the neighboring cell A and the measurement signal of the neighboring cell A.

S630B: The neighboring cell B sends the verification result of the neighboring cell B and a measurement signal of the neighboring cell B.

For example, the neighboring cell B may broadcast the verification result of the neighboring cell B and the measurement signal of the neighboring cell B.

S640: When the serving cell needs to be switched, the serving cell sends measurement configuration information to the terminal device.

For example, the serving cell may include the measurement configuration information in an RRC configuration message.

S650: The terminal device measures a channel between the neighboring cell A and the terminal device based on the measurement configuration information by using the measurement signal sent by the neighboring cell A, and measures a channel between the neighboring cell B and the terminal device based on the measurement configuration information by using the measurement signal sent by the neighboring cell B, to generate the measurement report.

For example, the measurement report includes the verification results of the plurality of neighboring cells and channel measurement results for the plurality of neighboring cells, and a verification result of each neighboring cell in the plurality of neighboring cells indicates whether an error floor of the neighboring cell is greater than or equal to the preset threshold. A channel measurement result for each neighboring cell in the plurality of neighboring cells is generated based on a measurement signal of the neighboring cell. The channel measurement results for and the verification results of the plurality of neighboring cells may be separately sent, or may be sent together. This is not limited in this application.

For example, the terminal device measures the channel between the neighboring cell A and the terminal device based on the measurement configuration information by using the measurement signal sent by the neighboring cell A, to obtain a channel measurement result for the neighboring cell A; and measures the channel between the neighboring cell B and the terminal device based on the measurement configuration information by using the measurement signal sent by the neighboring cell B, to obtain a channel measurement result for the neighboring cell B. In this case, the measurement report generated by the terminal device includes the channel measurement result for and the verification result of the neighboring cell A and the channel measurement result for and the verification result of the neighboring cell B.

In a possible implementation, the terminal device may further select at least one of the plurality of neighboring cells based on the verification results of the plurality of neighboring cells, where an error floor of the at least one neighboring cell is greater than or equal to the preset threshold, so that the terminal device may need to report, to a network device, only a channel measurement result for a neighboring cell that meets a security requirement.

S660: The terminal device sends the measurement report to the serving cell.

S670: The serving cell determines the target cell based on the received measurement report, where the error floor of the target cell is greater than or equal to the preset threshold.

In an existing cell handover solution, a communication security requirement of a terminal device is not considered. However, in the method shown in FIG. 6, the serving cell sends, to the plurality of neighboring cells, the preset security parameter reported by the terminal device, obtains the verification results of and the channel measurement results for the plurality of neighboring cells by using the measurement report, and further evaluates, with reference to the existing protocol, whether to perform cell handover, so that the communication security requirement of the terminal device can be met.

This application further provides a communication method. The method may be applied to a cell handover scenario. A serving cell receives a preset security parameter from a terminal device and error floors respectively corresponding to a plurality of neighboring cells, where the preset security parameter includes a preset degree of approaching or a preset security level. When the serving cell needs to be switched, the serving cell determines a target cell based on the preset security parameter and the error floors respectively corresponding to the plurality of neighboring cells, where an error floor of the target cell is greater than or equal to a preset threshold, and the preset threshold is determined based on the preset security parameter.

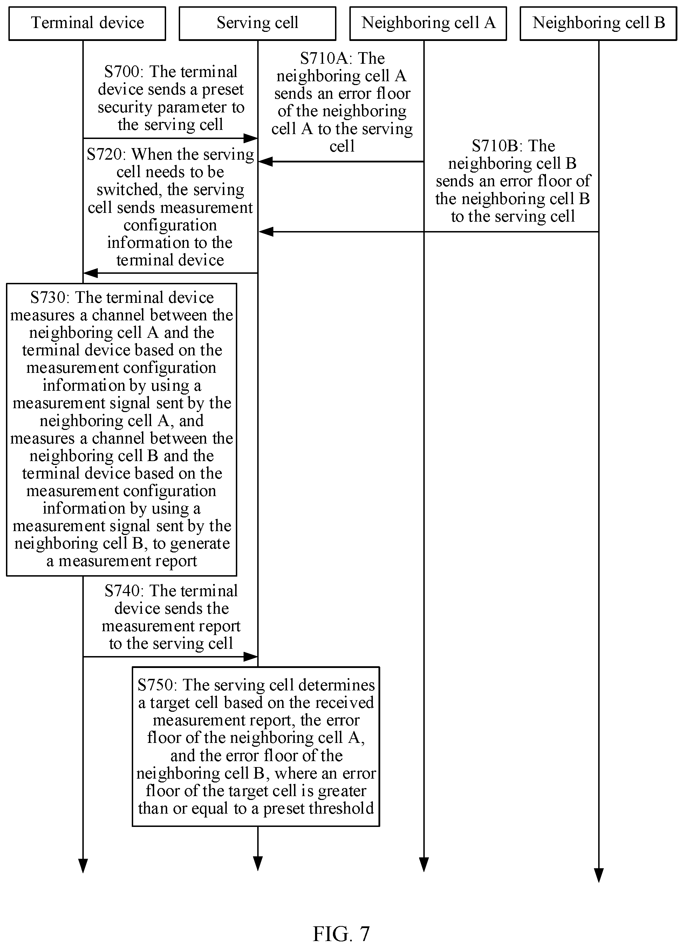

The following describes the foregoing cell handover process with reference to FIG. 7.

S700: The terminal device sends the preset security parameter to the serving cell, where the preset security parameter includes the preset degree of approaching or the preset security level.

S710A: A neighboring cell A sends an error floor of the neighboring cell A to the serving cell.

S710B: A neighboring cell B sends an error floor of the neighboring cell B to the serving cell.

For example, the serving cell receives the error floors respectively corresponding to the plurality of neighboring cells. An example in which the plurality of neighboring cells include the neighboring cell A and the neighboring cell B is merely used in FIG. 7 for description.

In a possible implementation, before the serving cell receives the error floors respectively corresponding to the plurality of neighboring cells, the serving cell sends a request message to each neighboring cell in the plurality of neighboring cells, where the request message is for requesting an error floor of the neighboring cell.

For example, when the serving cell determines that the serving cell needs to be switched, the serving cell sends the request message to each neighboring cell in the plurality of neighboring cells.

That the serving cell needs to be switched may mean: The serving cell determines that an error floor of the serving cell is less than the preset threshold, to be specific, the serving cell does not meet a communication security requirement of the terminal device. Alternatively, the serving cell determines that an error floor of the serving cell is greater than or equal to the preset threshold, but the serving cell meets a preset condition, to be specific, the serving cell meets a communication security requirement of the terminal device, and meets a determining condition for triggering the cell handover. The preset condition herein is a determining condition that is specified in an existing protocol and that is for triggering the cell handover.

In an example, when the preset security parameter includes the preset security level, the preset threshold is $1 - 2^{-\frac{\lambda_0}{L}}$, where $\lambda_0$ represents the preset security level, and L represents a length of a data group. The preset degree of approaching is a ratio of the preset security level to the length of the data group.

In another example, when the preset security parameter includes the preset degree of approaching, the preset threshold is $1 - 2^{-d_0}$, where $d_0$ represents the preset degree of approaching.

For example, the serving cell may alternatively send the request message to each neighboring cell in the plurality of neighboring cells in advance. In other words, even if the serving cell does not need to be switched, the serving cell may also send the request message to each neighboring cell in the plurality of neighboring cells.

S720: When the serving cell needs to be switched, the serving cell sends measurement configuration information to the terminal device.

For example, the serving cell may include the measurement configuration information in an RRC configuration message.

S730: The terminal device measures a channel between the neighboring cell A and the terminal device based on the measurement configuration information by using a measurement signal sent by the neighboring cell A, and measures a channel between the neighboring cell B and the terminal device based on the measurement configuration information by using a measurement signal sent by the neighboring cell B, to generate a measurement report.

For example, the measurement report includes channel measurement results for the plurality of neighboring cells, and a channel measurement result for each neighboring cell in the plurality of neighboring cells is generated based on a measurement signal of the neighboring cell.

For example, the terminal device measures the channel between the neighboring cell A and the terminal device based on the measurement configuration information by using the measurement signal sent by the neighboring cell A, to generate a channel measurement result for the neighboring cell A; and measures the channel between the neighboring cell B and the terminal device based on the measurement configuration information by using the measurement signal sent by the neighboring cell B, to generate a channel measurement result for the neighboring cell B. In this case, the measurement report generated by the terminal device includes the channel measurement result for the neighboring cell A and the channel measurement result for the neighboring cell B.

S740: The terminal device sends the measurement report to the serving cell.

S750: The serving cell determines the target cell based on the received measurement report, the error floor of the neighboring cell A, and the error floor of the neighboring cell B, where the error floor of the target cell is greater than or equal to the preset threshold.

For example, the serving cell may determine at least one neighboring cell whose error floor is greater than or equal to the preset threshold in the plurality of neighboring cells. Further, the serving cell may determine the target cell with reference to a channel measurement result for the at least one neighboring cell whose error floor is greater than or equal to the preset threshold.

In an existing cell handover solution, a communication security requirement of a terminal device is not considered. However, in the method shown in FIG. 7, the serving cell obtains the preset security parameter reported by the terminal device and the error floors respectively corresponding to the plurality of neighboring cells, and evaluates, based on the existing protocol and the channel measurement result for the neighboring cell whose error floor is greater than or equal to the preset threshold, whether to perform cell handover, so that the communication security requirement of the terminal device can be met.

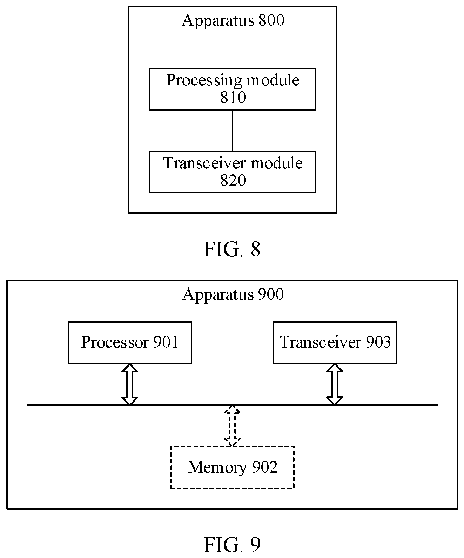

FIG. 8 is a possible example block diagram of a communication apparatus according to an embodiment of this application. The apparatus 800 includes a transceiver module 820 and a processing module 810. The transceiver module 820 may include a receiving unit and a sending unit. The processing module 810 is configured to control and manage an action of the apparatus 800. The transceiver module 820 is configured to support communication between the apparatus 800 and another network entity. Optionally, the apparatus 800 may further include a storage unit, and the storage unit is configured to store program code and data of the apparatus 800.

Optionally, the modules in the apparatus 800 may be implemented by using software.

Optionally, the processing module 810 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 810 may implement or execute various example logical blocks, modules, and circuits described with reference to content disclosed in embodiments of this application. The processor may alternatively be a combination of processors implementing a computing function, for example, a combination of one or more microprocessors, or a combination of a DSP and a microprocessor. The transceiver module 820 may be a communication interface, a transceiver, a transceiver circuit, or the like. The communication interface is a general term. During specific implementation, the communication interface may include a plurality of interfaces. The storage unit may be a memory.

When the apparatus 800 is a terminal device or a chip in the terminal device, the processing module 810 in the apparatus 800 may support the apparatus 800 in performing actions of the terminal device in the foregoing method examples, for example, may support the apparatus 800 in performing S510, S530, and S540 in FIG. 5.

The transceiver module 820 may support the apparatus 800 in communicating with a serving cell or a plurality of neighboring cells. For example, the transceiver module 820 may support the apparatus 800 in performing S500, S520A, and S520B in FIG. 5.

For example, the transceiver module 820 is configured to receive an error floor of the serving cell from the serving cell.

The processing module 810 is configured to: determine whether the error floor of the serving cell is less than a preset threshold, where the preset threshold is determined based on a preset security parameter, the preset security parameter includes a preset degree of approaching or a preset security level, and the preset degree of approaching is a ratio of key entropy needed for encrypting information entropy to the information entropy; and start cell reselection if the error floor of the serving cell is less than the preset threshold.

In a possible design, the error floor of the serving cell is a smallest bit error rate in a bit error rate of any location that is within a coverage area of the serving cell and that is outside a controlled area.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, the transceiver module 820 is configured to send indication information to the serving cell when the cell reselection is started, where the indication information indicates that the error floor of the serving cell is less than the preset threshold.

In a possible design, the transceiver module 820 is configured to receive error floors respectively corresponding to the plurality of neighboring cells.

The processing module 810 is configured to: determine, based on the error floors respectively corresponding to the plurality of neighboring cells, at least one neighboring cell whose error floor is greater than or equal to the preset threshold in the plurality of neighboring cells; and determine a reselected cell based on a channel measurement result respectively corresponding to the at least one neighboring cell whose error floor is greater than or equal to the preset threshold, where the reselected cell is one of the at least one neighboring cell whose error floor is greater than or equal to the preset threshold.

In a possible design, the transceiver module 820 is configured to receive error floors respectively corresponding to a plurality of neighboring cells. The processing module 810 is configured to: update, by the apparatus, the preset security parameter if it is determined, based on the error floors respectively corresponding to the plurality of neighboring cells, that no neighboring cell whose error floor is greater than or equal to the preset threshold exists; determine, based on the error floors respectively corresponding to the plurality of neighboring cells, that at least one neighboring cell whose error floor is greater than or equal to an updated preset threshold exists in the plurality of neighboring cells, where the updated preset threshold is determined based on an updated preset security parameter; and determine a reselected cell based on a channel measurement result respectively corresponding to the at least one neighboring cell whose error floor is greater than or equal to the updated preset threshold, where the reselected cell is one of the at least one neighboring cell whose error floor is greater than or equal to the updated preset threshold.

It should be understood that the apparatus 800 according to this embodiment of this application may correspond to the terminal device in the foregoing method embodiments, and operations and/or functions of the modules in the apparatus 800 are respectively for implementing corresponding steps of the method of the terminal device in the foregoing method embodiments. Therefore, beneficial effects in the foregoing method embodiments can also be implemented. For brevity, details are not described herein again.

When the apparatus 800 is a serving cell or a chip in the serving cell, the processing module 810 in the apparatus 800 may support the apparatus 800 in performing actions of the serving cell in the foregoing method examples, for example, may support the apparatus 800 in performing S670 in FIG. 6 or S750 in FIG. 7.

The transceiver module 820 may support the apparatus 800 in communicating with a terminal device or a plurality of neighboring cells. For example, the transceiver module 820 may support the apparatus 800 in performing S600, S610A, S610B, S640, and S660 in FIG. 6 or S700, S710A, S710B, S720, and S740 in FIG. 7.

In a possible implementation:

The transceiver module 820 is configured to: receive a preset security parameter from the terminal device, where the preset security parameter includes a preset degree of approaching or a preset security level, and the preset degree of approaching is a ratio of key entropy needed for encrypting information entropy to the information entropy; and send the preset security parameter to the plurality of neighboring cells.

The transceiver module 820 is configured to receive a measurement report from the terminal device when the apparatus needs to be switched, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter.

The processing module 810 is configured to determine a target cell based on the measurement report, where an error floor of the target cell is greater than or equal to the preset threshold.

In a possible design, the processing module 810 is configured to: when the apparatus needs to be switched, determine that an error floor of the apparatus is less than the preset threshold; or determine that an error floor of the apparatus is greater than or equal to the preset threshold, but the apparatus meets a preset condition.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, the error floor of each cell is a smallest bit error rate in a bit error rate of any location that is within a coverage area of the cell and that is outside a controlled area.

In another possible implementation:

The transceiver module 820 is configured to: receive a preset security parameter from the terminal device, where the preset security parameter includes a preset degree of approaching or a preset security level, and the preset degree of approaching is a ratio of key entropy needed for encrypting information entropy to the information entropy; and receive error floors respectively corresponding to the plurality of neighboring cells.

The processing module 810 is configured to: when the apparatus needs to be switched, determine a target cell based on the preset security parameter and the error floors respectively corresponding to the plurality of neighboring cells, where an error floor of the target cell is greater than or equal to a preset threshold, and the preset threshold is determined based on the preset security parameter.

In a possible design, when the apparatus needs to be switched, the processing module 810 is configured to: determine that an error floor of the apparatus is less than the preset threshold; or determine that an error floor of the apparatus is greater than or equal to the preset threshold, but the apparatus meets a preset condition.

In a possible design, when the preset security parameter includes the preset degree of approaching, the preset threshold is $1 - 2^{-d_0}$, where $d_0$ represents the preset degree of approaching.

In a possible design, the preset degree of approaching is a ratio of the preset security level to a length of a data group.

In a possible design, when the preset security parameter includes the preset security level, the preset threshold is

$$1 - 2^{-\frac{\lambda_0}{L}}$$, where $\lambda_0$ represents the preset security level, and L represents the length of the data group.

In a possible design, an error floor of each cell is a smallest bit error rate in a bit error rate of any location that is within a coverage area of the cell and that is outside a controlled area.

In a possible design, the transceiver module 820 is configured to: before the error floors respectively corresponding to the plurality of neighboring cells are received, send a request message to each neighboring cell in the plurality of neighboring cells, where the request message is for requesting an error floor of the neighboring cell.

In a possible design, when the target cell is determined based on the at least one neighboring cell whose error floor is greater than or equal to the preset threshold, the transceiver module 820 receives a measurement report from the terminal device. The processing module 810 determines the target cell based on the measurement report and at least one neighboring cell whose error floor is greater than or equal to the preset threshold, where the measurement report includes a channel measurement result respectively corresponding to the at least one neighboring cell whose error floor is greater than or equal to the preset threshold.

It should be understood that the apparatus 800 according to this embodiment of this application may correspond to the serving cell in the foregoing method embodiments, and operations and/or functions of the modules in the apparatus 800 are respectively for implementing corresponding steps of the method of the serving cell in the foregoing method embodiments. Therefore, beneficial effects in the foregoing method embodiments can also be implemented. For brevity, details are not described herein again.

FIG. 9 is a diagram of a structure of a communication apparatus 900 according to an embodiment of this application. As shown in FIG. 9, the apparatus 900 includes a processor 901.

When the apparatus 900 is a terminal device or a chip in the terminal device, in a possible implementation, the processor 901 is configured to invoke an interface to perform the following actions: receiving a preset security parameter from the terminal device, where the preset security parameter includes a preset degree of approaching or a preset security level, and the preset degree of approaching is a ratio of key entropy needed for encrypting information entropy to the information entropy; sending the preset security parameter to a plurality of neighboring cells; receiving a measurement report from the terminal device when the apparatus needs to be switched, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter; and determining a target cell based on the measurement report, where an error floor of the target cell is greater than or equal to the preset threshold.

It should be understood that the apparatus 900 may be further configured to perform other steps and/or operations of the terminal device in the foregoing embodiments. For brevity, details are not described herein.

When the apparatus 900 is a serving cell or a chip in the serving cell, in a possible implementation, the processor 901 is configured to invoke an interface to perform the following actions: receiving a preset security parameter from a terminal device, where the preset security parameter includes a preset degree of approaching or a preset security level, and the preset degree of approaching is a ratio of key entropy needed for encrypting information entropy to the information entropy; sending the preset security parameter to a plurality of neighboring cells; when the apparatus needs to be switched, receiving a measurement report from the terminal device, where the measurement report includes verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter; and determining a target cell based on the measurement report, where an error floor of the target cell is greater than or equal to the preset threshold.

In another possible implementation, the processor 901 is configured to invoke an interface to perform the following actions: receiving a preset security parameter from a terminal device, where the preset security parameter includes a preset degree of approaching or a preset security level, and the preset degree of approaching is a ratio of key entropy needed for encrypting information entropy to the information entropy; receiving error floors respectively corresponding to a plurality of neighboring cells; and when the apparatus needs to be switched, determining a target cell based on the preset security parameter and the error floors respectively corresponding to the plurality of neighboring cells, where an error floor of the target cell is greater than or equal to a preset threshold, and the preset threshold is determined based on the preset security parameter.

It should be understood that the apparatus 900 may be further configured to perform other steps and/or operations of the serving cell in the foregoing embodiments. For brevity, details are not described herein.

It should be understood that the processor 901 may invoke the interface to perform the foregoing sending and receiving actions. The invoked interface may be a logical interface or a physical interface. This is not limited. Optionally, the physical interface may be implemented by a transceiver. Optionally, the apparatus 900 further includes a transceiver 903.

Optionally, the apparatus 900 further includes a memory 902, and the memory 902 may store program code in the foregoing method embodiments, so that the processor 901 invokes the program code.

Specifically, if the apparatus 900 includes the processor 901, the memory 902, and the transceiver 903, the processor 901, the memory 902, and the transceiver 903 communicate with each other through an inner connection path, to communicate a control signal and/or a data signal. In a possible design, the processor 901, the memory 902, and the transceiver 903 may be implemented by a chip. The processor 901, the memory 902, and the transceiver 903 may be implemented in a same chip, or may be separately implemented in different chips; or any two functions thereof are implemented in one chip in combination. The memory 902 may store the program code. The processor 901 invokes the program code stored in the memory 902 to implement corresponding functions of the apparatus 900.

This application further provides a communication system. The system includes a serving cell, a terminal device, and a plurality of neighboring cells. The serving cell is configured to perform steps and/or operations on a side of the serving cell in the foregoing embodiments, the terminal device is configured to perform steps and/or operations on a side of the terminal device in the foregoing embodiments, and the plurality of neighboring cells are configured to perform steps and/or operations on a side of the plurality of neighboring cells in the foregoing embodiments.

The method disclosed in the foregoing embodiment of this application may be applied to a processor, or may be implemented by the processor. The processor may be an integrated circuit chip and has a signal processing capability. In an implementation process, steps in the foregoing method embodiments may be implemented by using a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware thereof.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these memories and any memory of another appropriate type.

An embodiment of this application further provides a computer-readable storage medium. The computer-readable storage medium stores a computer program. When the computer program is run on a computer, the computer is enabled to perform the methods described in the foregoing embodiments.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, a solid-state drive (Solid-State Drive, SSD)), or the like.

In conclusion, the foregoing embodiments are merely intended to describe the technical solutions of this application in detail. However, the descriptions of the foregoing embodiments are merely intended to help understand the methods according to embodiments of the present invention, and shall not be construed as any limitation on embodiments of the present invention. Variations or replacements readily figured out by a person skilled in the art shall fall within the protection scope of embodiments of the present invention.

**Claims**

1. A communication method, wherein the method comprises:

receiving, by a terminal device, an error floor of a serving cell from the serving cell;

determining, by the terminal device, whether the error floor of the serving cell is less than a preset threshold, wherein the preset threshold is determined based on a preset security parameter, the preset security parameter comprises a preset degree of approaching or a preset security level, and the preset degree of approaching is a ratio of key entropy needed for encrypting information entropy to the information entropy; and

starting, by the terminal device, cell reselection if the error floor of the serving cell is less than the preset threshold.

2. The method according to claim 1, wherein the error floor of the serving cell is a smallest bit error rate in a bit error rate of any location that is within a coverage area of the serving cell and that is outside a controlled area.

3. The method according to claim 1 or 2, wherein when the preset security parameter comprises the preset degree of approaching, the preset threshold is $1 - 2^{-d_0}$, wherein $d_0$ represents the preset degree of approaching.

4. The method according to claim 1 or 2, wherein the preset degree of approaching is a ratio of the preset security level to a length of a data group.

5. The method according to claim 4, wherein when the preset security parameter comprises the preset security level, the preset threshold is $1 - 2^{-\frac{\lambda_0}{L}}$, wherein $\lambda_0$ represents the preset security level, and L represents the length of the data group.

6. The method according to any one of claims 1 to 5, wherein the starting, by the terminal device, cell reselection comprises:

sending, by the terminal device, indication information to the serving cell, wherein the indication information indicates that the error floor of the serving cell is less than the preset threshold.

7. The method according to any one of claims 1 to 6, further comprising:

receiving, by the terminal device, error floors respectively corresponding to a plurality of neighboring cells;

determining, by the terminal device based on the error floors respectively corresponding to the plurality of neighboring cells, at least one neighboring cell whose error floor is greater than or equal to the preset threshold in the plurality of neighboring cells; and

determining, by the terminal device, a reselected cell based on a channel measurement result respectively corresponding to the at least one neighboring cell whose error floor is greater than or equal to the preset threshold, wherein the reselected cell is one of the at least one neighboring cell whose error floor is greater than or equal to the preset threshold.

8. The method according to any one of claims 1 to 6, further comprising:

receiving, by the terminal device, error floors respectively corresponding to a plurality of neighboring cells;

updating, by the terminal device, the preset security parameter if the terminal device determines, based on the error floors respectively corresponding to the plurality of neighboring cells, that no neighboring cell whose error floor is greater than or equal to the preset threshold exists;

determining, by the terminal device based on the error floors respectively corresponding to the plurality of neighboring cells, that at least one neighboring cell whose error floor is greater than or equal to an updated preset threshold exists in the plurality of neighboring cells, wherein the updated preset threshold is determined based on an updated preset security parameter; and

determining, by the terminal device, a reselected cell based on a channel measurement result respectively corresponding to the at least one neighboring cell whose error floor is greater than or equal to the updated preset threshold, wherein the reselected cell is one of the at least one neighboring cell whose error floor is greater than or equal to the updated preset threshold.

9. A communication method, wherein the method comprises:

receiving, by a serving cell, a preset security parameter from a terminal device, wherein the preset security parameter comprises a preset degree of approaching or a preset security level, and the preset degree of approaching is a ratio of key entropy needed for encrypting information entropy to the information entropy;

sending, by the serving cell, the preset security parameter to a plurality of neighboring cells;

when the serving cell needs to be switched, receiving, by the serving cell, a measurement report from the terminal device, wherein the measurement report comprises verification results of the plurality of neighboring cells, a verification result of each neighboring cell in the plurality of neighboring cells indicates whether an error floor of the neighboring cell is greater than or equal to a preset threshold, and the preset threshold is determined based on the preset security parameter; and

determining, by the serving cell, a target cell based on the measurement report, wherein an error floor of the target cell is greater than or equal to the preset threshold.

10. The method according to claim 9, wherein that the serving cell needs to be switched comprises:
the serving cell determines that an error floor of the serving cell is less than the preset threshold; or the serving cell determines that an error floor of the serving cell is greater than or equal to the preset threshold, but the serving cell meets a preset condition.

11. The method according to claim 9 or 10, wherein when the preset security parameter comprises the preset degree of approaching, the preset threshold is $1 - 2^{-d_0}$, wherein $d_0$ represents the preset degree of approaching.

12. The method according to claim 9 or 10, wherein the preset degree of approaching is a ratio of the preset security level to a length of a data group.

13. The method according to claim 12, wherein when the preset security parameter comprises the preset security level, the preset threshold is $1 - 2^{-\frac{\lambda_0}{L}}$, wherein $\lambda_0$ represents the preset security level, and L represents the length of the data group.

14. The method according to any one of claims 9 to 13, wherein the error floor of each cell is a smallest bit error rate in a bit error rate of any location that is within a coverage area of the cell and that is outside a controlled area.

15. A communication method, wherein the method comprises:

receiving, by a serving cell, a preset security parameter from a terminal device, wherein the preset security parameter comprises a preset degree of approaching or a preset security level, and the preset degree of approaching is a ratio of key entropy needed for encrypting information entropy to the information entropy;

receiving, by the serving cell, error floors respectively corresponding to a plurality of neighboring cells; and

when the serving cell needs to be switched, determining, by the serving cell, a target cell based on the preset security parameter and the error floors respectively corresponding to the plurality of neighboring cells, wherein an error floor of the target cell is greater than or equal to a preset threshold, and the preset threshold is determined based on the preset security parameter.

16. The method according to claim 15, wherein that the serving cell needs to be switched comprises:
the serving cell determines that an error floor of the serving cell is less than the preset threshold; or the serving cell determines that an error floor of the serving cell is greater than or equal to the preset threshold, but the serving cell meets a preset condition.

17. The method according to claim 15 or 16, wherein when the preset security parameter comprises the preset degree of approaching, the preset threshold is $1 - 2^{-d_0}$, wherein $d_0$ represents the preset degree of approaching.

18. The method according to claim 15 or 16, wherein the preset degree of approaching is a ratio of the preset security level to a length of a data group.

19. The method according to claim 18, wherein when the preset security parameter comprises the preset security level, the preset threshold is $1 - 2^{-\frac{\lambda_0}{L}}$, wherein $\lambda_0$ represents the preset security level, and L represents the length of the data group.

20. The method according to any one of claims 15 to 19, wherein an error floor of each cell is a smallest bit error rate in a bit error rate of any location that is within a coverage area of the cell and that is outside a controlled area.

21. The method according to any one of claims 15 to 20, wherein before the receiving, by the serving cell, error floors respectively corresponding to a plurality of neighboring cells, the method further comprises:
sending, by the serving cell, a request message to each neighboring cell in the plurality of neighboring cells, wherein the request message is for requesting an error floor of the neighboring cell.

22. The method according to any one of claims 15 to 21, wherein determining, by the serving cell, the target cell based on the at least one neighboring cell whose error floor is greater than or equal to the preset threshold comprises:

receiving, by the serving cell, a measurement report from the terminal device, wherein the measurement report comprises a channel measurement result respectively corresponding to the at least one neighboring cell whose error floor is greater than or equal to the preset threshold; and
determining, by the serving cell, the target cell based on the measurement report and the at least one neighboring cell whose error floor is greater than or equal to the preset threshold.

23. A communication apparatus, comprising a unit or a module configured to perform the method according to any one of claims 1 to 8, comprising a unit or a module configured to perform the method according to any one of claims 9 to 14, or comprising a unit or a module configured to perform the method according to any one of claims 15 to 22.

24. A communication apparatus, wherein the communication apparatus comprises a processor and a storage medium, and the storage medium stores instructions; and when the instructions are run by the processor, the method according to any one of claims 1 to 8 is implemented, the method according to any one of claims 9 to 14 is implemented, or the method according to any one of claims 15 to 22 is implemented.

25. A communication apparatus, comprising a processor and an interface circuit, wherein the interface circuit is configured to receive code instructions and transmit the code instructions to the processor, and the processor runs the code instructions to perform the method according to any one of claims 1 to 22.

26. A readable storage medium, wherein the readable storage medium is configured to store instructions; and when the instructions are executed, the method according to any one of claims 1 to 22 is implemented.

FIG. 1

FIG. 2

FIG. 3

FIG. 4

| Terminal device | Serving cell | Neighboring cell A | Neighboring cell B |
|---|---|---|---|

S500: The serving cell sends an error floor of the serving cell

S510: The terminal device determines whether the error floor of the serving cell is less than a preset threshold; and if the error floor of the serving cell is less than the preset threshold, the terminal device starts cell reselection

S520A: The neighboring cell A sends a measurement signal of the neighboring cell A and an error floor of the neighboring cell A

S520B: The neighboring cell B sends a measurement signal of the neighboring cell B and an error floor of the neighboring cell B

S530: The terminal device determines, based on the error floor of the neighboring cell A and the error floor of the neighboring cell B, at least one neighboring cell whose error floor is greater than or equal to the preset threshold

S540: The terminal device determines a reselected cell based on a channel measurement result respectively corresponding to the at least one neighboring cell whose error floor is greater than or equal to the preset threshold

FIG. 5

| Terminal device | Serving cell | Neighboring cell A | Neighboring cell B |
|---|---|---|---|

S600: The terminal device sends a preset security parameter to the serving cell

S610A: The serving cell sends the preset security parameter to the neighboring cell A

S610B: The serving cell sends the preset security parameter to the neighboring cell B

S620A: The neighboring cell A determines an error floor of the neighboring cell A, and determines a verification result of the neighboring cell A based on the received preset security parameter

S620B: The neighboring cell B determines an error floor of the neighboring cell B, and determines a verification result of the neighboring cell B based on the received preset security parameter

S630A: The neighboring cell A sends the verification result of the neighboring cell A and a measurement signal of the neighboring cell A

S630B: The neighboring cell B sends the verification result of the neighboring cell B and a measurement signal of the neighboring cell B

S640: When the serving cell needs to be switched, the serving cell sends measurement configuration information to the terminal device

S650: The terminal device measures a channel between the neighboring cell A and the terminal device based on the measurement configuration information by using the measurement signal sent by the neighboring cell A, and measures a channel between the neighboring cell B and the terminal device based on the measurement configuration information by using the measurement signal sent by the neighboring cell B, to generate a measurement report

S660: The terminal device sends the measurement report to the serving cell

S670: The serving cell determines a target cell based on the received measurement report, where an error floor of the target cell is greater than or equal to a preset threshold

FIG. 6

| Terminal device | Serving cell | Neighboring cell A | Neighboring cell B |
|---|---|---|---|

S700: The terminal device sends a preset security parameter to the serving cell

S710A: The neighboring cell A sends an error floor of the neighboring cell A to the serving cell

S710B: The neighboring cell B sends an error floor of the neighboring cell B to the serving cell

S720: When the serving cell needs to be switched, the serving cell sends measurement configuration information to the terminal device

S730: The terminal device measures a channel between the neighboring cell A and the terminal device based on the measurement configuration information by using a measurement signal sent by the neighboring cell A, and measures a channel between the neighboring cell B and the terminal device based on the measurement configuration information by using a measurement signal sent by the neighboring cell B, to generate a measurement report

S740: The terminal device sends the measurement report to the serving cell

S750: The serving cell determines a target cell based on the received measurement report, the error floor of the neighboring cell A, and the error floor of the neighboring cell B, where an error floor of the target cell is greater than or equal to a preset threshold

FIG. 7

Apparatus 800

Processing module
810

Transceiver module
820

FIG. 8

Apparatus 900

Processor 901

Transceiver 903

Memory 902

FIG. 9

## INTERNATIONAL SEARCH REPORT

| International application No. |
| --- |
| **PCT/CN2022/130137** |

### A. CLASSIFICATION OF SUBJECT MATTER

H04W36/08(2009.01)i

According to International Patent Classification (IPC) or to both national classification and IPC

### B. FIELDS SEARCHED

Minimum documentation searched (classification system followed by classification symbols)

IPC: H04L，H04W

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP, IEEE: 误码率, 随机熵, 逼近度, 小区, 重选, 切换, BER, random entropy, ORE, BRE, CRE, approximation, cell, reselection, handover

### C. DOCUMENTS CONSIDERED TO BE RELEVANT

| Category* | Citation of document, with indication, where appropriate, of the relevant passages | Relevant to claim No. |
| --- | --- | --- |
| A | US 11483748 B1 (NANNING FULIAN FUGUI PRECISION INDUSTRIAL CO., LTD.) 25 October 2022 (2022-10-25) <br> description, column 2, line 30-column 4, line 16 | 1-26 |
| A | US 2021321313 A1 (HUAWEI TECHNOLOGIES CO., LTD.) 14 October 2021 (2021-10-14) <br> entire document | 1-26 |
| A | WO 2022017483 A1 (ONEPLUS TECHNOLOGY (SHENZHEN) CO., LTD.) 27 January 2022 (2022-01-27) <br> entire document | 1-26 |
| A | HUAWEI et al. "Introduction of serving cell idel mode measurements reporting in 36.331" <br> *3GPP TSG-RAN WG2 Meeting #102 R2-1807868,* 25 May 2018 (2018-05-25), <br> entire document | 1-26 |
| A | PAROPKARI, Rahul Arun et al. "Fractional Packet Duplication and Fade Duration Outage Probability Analysis for Handover Enhancement in 5G Cellular Networks" <br> *2019 International Conference on Computing, Networking and Communications (ICNC),* <br> 11 April 2019 (2019-04-11), <br> entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 July 2023** | **14 July 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/130137**

| Patent document cited in search report | | | Publication date (day/month/year) | Patent family member(s) | | | Publication date (day/month/year) |
|---|---|---|---|---|---|---|---|
| US | 11483748 | B1 | 25 October 2022 | US | 2022377632 | A1 | 24 November 2022 |
| US | 2021321313 | A1 | 14 October 2021 | WO | 2020135400 | A1 | 02 July 2020 |
| | | | | JP | 2022515840 | A | 22 February 2022 |
| | | | | EP | 3893548 | A1 | 13 October 2021 |
| | | | | CN | 111372293 | A | 03 July 2020 |
| WO | 2022017483 | A1 | 27 January 2022 | CN | 113973346 | A | 25 January 2022 |

Form PCT/ISA/210 (patent family annex) (July 2022)